# FASCICULE DE BREVET EUROPEEN

(11) **EP 2 062 516 B1**
(45) Date de publication et mention de la délivrance du brevet: **08.06.2011**
(21) Numéro de dépôt: 08300141.2
(22) Date de dépôt: 12.03.2008
(51) Int. Cl.: A47J 43/25

(54) **Coupe-légumes manuel permettant la découpe de légumes en bâtonnets ou en cubes**
Manueller Gemüseschneider zum Schneiden des Gemüses in Stiftchen oder Würfel
Manual vegetable cutter for cutting vegetables into strips or cubes

(30) Priorité: 26.11.2007 FR 0759293
(43) Date de publication de la demande: 27.05.2009
(73) Titulaire: De Buyer Industries, 88340 Le Val d'Ajol (FR)
(72) Inventeur: De Buyer, Julien, 88340, Le Val d'Ajol (FR); Mathieu, Jean Noël, 88120 Vagney (FR)
(74) Mandataire: Boulinguiez, Didier

(56) Documents cités:
- FR-A- 2 825 043

## Description

La présente invention a pour objet un coupe-légumes manuel permettant la découpe de légumes en bâtonnets ou en cubes.

Ce coupe-légumes peut être à usage domestique mais est avant tout destiné aux professionnels des métiers de bouche.

Un tel coupe-légumes qui est classiquement nommé « mandoline » doit par suite satisfaire à toute une série d'exigences propres à ce domaine d'utilisation compte tenu en particulier de la fébrilité qui règne généralement dans les cuisines lors de la préparation des plats.

Il doit notamment permettre de découper très rapidement toute une variété de légumes.

Il ne doit pas exposer son utilisateur à des risques de coupure.

Il doit en outre permettre de faire varier sélectivement et rapidement les caractéristiques de coupe sans nécessiter de démontage complexe.

Il doit également pouvoir être nettoyé facilement et correctement sans risque de proliférations bactériennes dues des résidus alimentaires inaccessibles.

La présente invention a pour objet de proposer un coupe-légumes manuel de nature à satisfaire à ces exigences.

Un tel coupe-légumes comporte essentiellement un châssis muni d'une lame de coupe montée transversalement en regard d'une fente de passage des légumes découpés ainsi que de deux montants latéraux parallèles définissant deux rails de guidage ainsi qu'un chariot mobile en translation en va-et-vient le long de ces rails et un couteau de découpe longitudinale, de préférence amovible équipé d'un ensemble de lames triangulaires équidistantes situées en regard de la lame transversale, au droit de la fente de passage des légumes découpés et orientées essentiellement perpendiculairement à cette lame.

Selon l'invention, le chariot est constitué d'une part par une chambre guide formée par une plaque de guidage essentiellement rectangulaire munie d'une ouverture médiane circulaire et se prolongeant autour de cette ouverture par une paroi cylindrique délimitant à sa partie interne une chambre de réception des légumes à découper, et d'autre part par un poussoir mobile en rotation autour de la paroi cylindrique de la chambre guide sur laquelle il s'emboîte et susceptible d'être saisi manuellement par l'utilisateur de façon à permettre de déplacer le chariot en va-et-vient le long des rails de guidage en exerçant constamment une pression sur les légumes contenus dans la chambre de réception de façon à les appliquer contre la lame de coupe transversale et à permettre leur découpe par cette lame.

La translation en va-et-vient du chariot le long des rails de guidage se décompose en une succession de phases actives pendant lesquelles les légumes sont découpés par les lames et de phases de retour du chariot, inopérantes.

Bien entendu, dans le cadre de l'invention, le terme « légumes » doit être considéré dans un sens très large et les légumes découpés peuvent non seulement être à proprement parler des légumes de type quelconque (pommes de terre, concombres, carottes...) mais également de fruits ou autres aliments se prêtant à la coupe.

Un coupe-légumes manuel de ce type qui est à titre d'exemple décrit dans le document FR 2 825 043 donne globalement satisfaction à ses utilisateurs.

Il est avantageusement équipé de moyens de réglage de la hauteur de coupe ainsi que de plusieurs lames transversales amovibles et interchangeables susceptibles d'être sélectivement positionnées sur le châssis, en particulier de lames équipées de tranchants rectilignes et de lames équipées de tranchants ondulés de façon à permettre d'obtenir des rondelles lisses ou des rondelles présentant des stries.

La possibilité de faire tourner le poussoir autour de la paroi cylindrique de la chambre guide au cours du mouvement de translation en va-et-vient du chariot permet en outre d'obtenir une découpe de type « gaufrette ».

De plus, le couteau de découpe longitudinale permet de découper les légumes en bâtonnets.

Il est en outre avantageux d'équiper le coupe-légumes de plusieurs couteaux de découpe longitudinale se distinguant par l'écartement des lames triangulaires de façon à permettre de faire varier la largeur de ces bâtonnets.

Il est toutefois à noter que pendant les phases de retour du chariot, les lames triangulaires du couteau de découpe longitudinale dont l'extrémité fait légèrement saillie sur le châssis endommagent les légumes à découper présents dans la chambre de réception.

De plus, un tel coupe-légumes ne permet pas de découper des légumes en cubes.

La présente invention a pour objet de proposer un coupe-légumes de nature à remédier à ces inconvénients, ce tout en conservant les avantages inhérents au coupe-légumes manuel connu décrit ci-dessus.

A cet effet, elle a pour objet un coupe-légumes du type susmentionné caractérisé en ce que le couteau de découpe longitudinale coopère avec des moyens de positionnement permettant son montage élastique de part et d'autre du châssis entre d'une part une position de travail dans laquelle les lames triangulaires font largement saillie à la surface supérieure du châssis de façon à permettre de découper les légumes en bâtonnets ou en cubes pendant les phases actives et vers laquelle le couteau de découpe longitudinale est automatiquement rappelé en l'absence de toute contrainte extérieure s'exerçant sur lui, et d'autre part une position rétractée dans laquelle les lames triangulaires sont escamotées dans la fente de passage des légumes découpés.

La translation du chariot pendant les phases de retour entraîne automatiquement le déplacement du couteau de découpe longitudinale en position rétractée.

Le coupe-légumes manuel conforme à l'invention se distingue donc par le montage particulier du couteau de découpe longitudinale qui permet aux lames triangulaires de ce couteau de faire largement saillie sur le châssis pendant les phases actives de la translation en va-et-vient du chariot pour permettre une découpe satisfaisante des légumes, mais d'être escamotées dans la fente de passage des légumes découpés pendant les phases de retour du chariot de façon à éviter tout endommagement des légumes contenus dans la chambre de réception.

De plus, une rotation d'un quart de tour du poussoir autour de la paroi cylindrique de la chambre guide lors de chacune des phases du mouvement de translation en va-et-vient du chariot permet d'obtenir une découpe en cubes, ce que le coupe-légumes manuel connu susmentionné ne permettait pas.

Le coupe-légumes manuel qui fait l'objet de l'invention peut avantageusement reposer sur au moins un pied, de préférence repliable.

Le châssis peut à titre d'exemple avantageusement être monté sur deux pieds trapézoïdaux repliables, à savoir un pied avant et un pied arrière, essentiellement en forme de U.

Le pied avant permet de rehausser l'avant du châssis.

Le pied arrière permet de mettre en oeuvre le coupe-légumes sur un récipient tel qu'une bassine en l'utilisant comme appui ; l'appui ainsi obtenu est stable et permet par suite de sécuriser l'utilisation du coupe-légumes.

La mise en appui du coupe-légumes sur le pied avant et sur le pied arrière permet en outre d'obtenir un angle de travail plus confortable.

Il est en outre à noter que le coupe-légumes conforme à l'invention est en règle générale équipé d'une série de couteaux de découpe longitudinale dont les lames ont un écartement plus ou moins important de façon à obtenir des bâtonnets ou des cubes plus ou moins gros.

Selon une caractéristique préférentielle de l'invention, les moyens de positionnement du couteau de découpe longitudinale sont symétriques par rapport à l'axe longitudinal du châssis et comportent essentiellement deux coulisseaux de réception de ce couteau ainsi que deux cames d'actionnement.

Ces éléments sont respectivement situés en regard de part et d'autre du châssis.

Les coulisseaux de réception sont montés mobiles en translation le long des montants latéraux du châssis, essentiellement perpendiculairement à l'axe longitudinal de celui et sont respectivement soumis à l'action d'un ressort de rappel.

Les deux cames d'actionnement sont quant à elles montées mobiles en rotation sur les montants latéraux du châssis, autour d'un axe transversal ; elles viennent en prise avec un coulisseau de réception associé et coopèrent avec la chambre guide pour permettre le déplacement du couteau de découpe longitudinale entre la position de travail et la position rétractée au cours de la translation en va-et-vient du chariot.

Chacun des coulisseaux de réception est de préférence monté dans une fente percée dans l'un des montants latéraux du châssis dans laquelle il peut se déplacer en translation.

Ces coulisseaux comportent ainsi, de part et d'autre de cette fente, d'une part une partie interne équipée d'organes de maintien du couteau de découpe longitudinale, et d'autre part une partie externe équipée d'un téton par lequel elle vient en prise avec le ressort de rappel.

Ces fentes peuvent avantageusement être recouvertes, sur leur face externe, d'un capot définissant un logement pour la partie externe du coulisseau de réception ainsi que pour le ressort de rappel.

Selon une autre caractéristique de l'invention, les organes de maintien du couteau de découpe longitudinale sont constitués d'une part par des bossages et/ou des évidements prévus sur la face interne de la partie interne des coulisseaux de réception et coopérant avec des évidements et/ou des bossages correspondants prévus sur les faces latérales situées en regard du couteau de découpe longitudinale, et d'autre part par des barrettes rotatives permettant de bloquer ce couteau au niveau de sa face inférieure.

Il est avantageux que ces bossages et ces évidements soient dissymétriques de part et d'autre du châssis de façon à garantir que le couteau de découpe longitudinale soit toujours monté dans le bon sens.

La rotation des barrettes rotatives permet de bloquer ce couteau sur le châssis ou de l'en extraire.

Selon une caractéristique préférentielle de l'invention, chacune des cames d'actionnement comporte un secteur principal mobile en rotation le long de la face interne du montant latéral associé et se prolongeant vers l'extérieur par un pivot se déplaçant dans une lumière oblongue courbe percée dans ce montant et faisant saillie sur la face externe de celui-ci.

Ce pivot vient en prise avec une face supérieure, opérationnelle, de la partie externe du coulisseau de réception associé pour permettre de déplacer le couteau de découpe longitudinale vers la position rétractée.

Pour commander ce déplacement, le secteur principal de chacune des cames d'actionnement comporte avantageusement une rampe de manoeuvre venant en prise avec la chambre guide pendant les phases de retour du chariot.

Compte tenu de cette configuration et à partir de la position de travail, au cours d'une phase de retour du chariot, le bord frontal de la plaque de guidage de la chambre guide vient en prise avec la rampe de manoeuvre des cames d'actionnement et entraîne la rotation de ces cames autour de leur axe.

Cette rotation entraîne le déplacement des pivots dans les lumières oblongues courbes et par suite, le déplacement vers le bras des coulisseaux de réception, ce contre la force des ressorts de rappel.

Le couteau de découpe longitudinale est ainsi déplacé en position rétractée et demeure dans cette position tant que la plaque de guidage de la chambre guide est située au droit des cames d'actionnement.

A la fin de la phase de retour du chariot, le bord arrière de la plaque de guidage de la chambre guide se déplace au-delà des cames d'actionnement et libère donc celles-ci.

Les ressorts de rappel exercent alors une force dirigée vers le haut sur les tétons pour déplacer les coulisseaux de réception et par suite les pivots des cames d'actionnement dans les lumières oblongues courbes, ce qui entraîne automatiquement la rotation de ces cames.

Le couteau de découpe longitudinale est ainsi déplacé en position de travail et demeure dans cette position pendant la phase active suivante du déplacement du chariot pour permettre une découpe efficace des légumes, ce, jusqu'à ce que, au début de la phase de retour ultérieur du chariot, le bord frontal de la plaque de guidage de la chambre guide vienne à nouveau en prise avec la rampe de manoeuvre des cames d'actionnement et ainsi de suite.

Il est à noter que, dans le cadre de cet exposé, les termes « haut » et « bas » se réfèrent à un coupe-légumes reposant sur une surface plane, en position d'utilisation.

Selon une autre caractéristique de l'invention, la paroi cylindrique de la chambre guide se prolonge au-delà de la plaque de guidage par une collerette munie d'une série d'évidements positionnés de manière à permettre le passage des lames triangulaires du couteau de découpe longitudinale pendant les phases actives de la translation en va-et-vient du chariot.

Des rainures correspondantes peuvent également être prévues sur la face inférieure de la plaque de guidage.

Il est à noter que la position de ces évidements et de ces rainures doit être choisie de façon à permettre le passage de toutes les lames des différents couteaux de découpe longitudinale équipant le coupe-légumes manuel conforme à l'invention.

Selon une autre caractéristique de l'invention, le châssis est équipé, à sa partie supérieure, d'un revêtement anti adhésif permettant d'améliorer le glissement des légumes à découper.

Ce revêtement ne s'étend de préférence pas sur la totalité de la largeur du châssis, mais uniquement à sa partie médiane de façon à permettre un centrage automatique des légumes lors du déplacement en va-et-vient du chariot le long de celui-ci.

Les caractéristiques du coupe-légumes qui fait l'objet de l'invention seront décrites plus en détail en se référant aux dessins non limitatifs annexés dans lesquels :
- la figure 1 est une vue en perspective du coupe-légumes,
- la figure 2 est une vue en perspective représentant un détail de la face interne d'un montant latéral illustrant la configuration des moyens de positionnement du couteau de découpe longitudinale en position de travail,
- la figure 3 est une vue en perspective représentant un détail de la face externe d'un montant latéral illustrant la configuration des moyens de positionnement du couteau de découpe longitudinale en position de travail, et
- la figure 4 est une vue similaire à la figure 3 mais illustrant la configuration des moyens de positionnement du couteau de découpe longitudinale en position rétractée,
- les figures 5a, 5b et 5c sont des vues en perspective représentant la chambre guide sous différents angles.

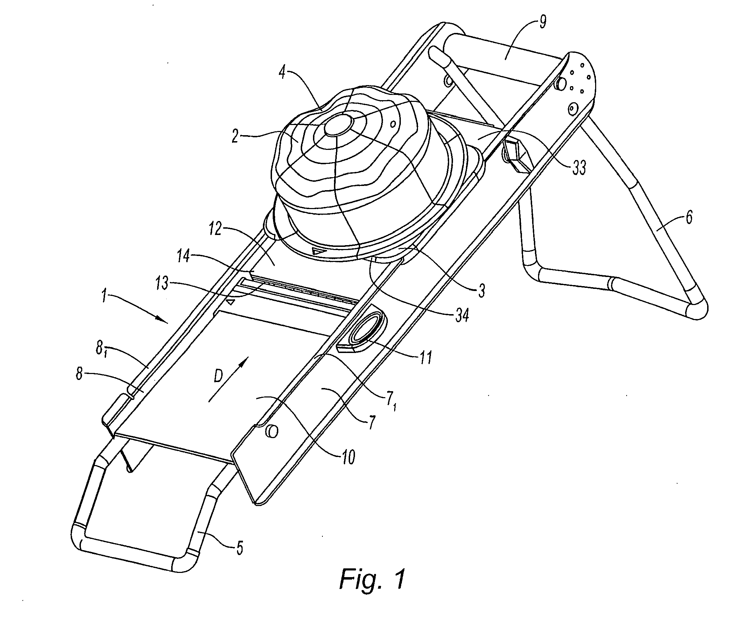

Selon la figure 1, le coupe-légumes est essentiellement constitué d'un châssis 1 ainsi que d'un chariot 2 lui-même constitué par une chambre guide 3 et un poussoir 4.

Le châssis 1 est monté sur deux pieds trapézoïdaux essentiellement en forme de U, à savoir un pied avant 5 et un pied arrière 6.

Ce châssis 1 est essentiellement constitué d'une part de deux montants latéraux parallèles 7, 8 reliés par une poignée de manoeuvre transversale 9 et par une entretoise 10 sur laquelle peut glisser une lame de coupe transversale 11 et d'autre part d'une rampe de réglage 12 de la hauteur de coupe dont une première extrémité 13 est située en regard de la lame de coupe 11 de façon à définir une fente de passage 14 des légumes découpés.

Les bords supérieurs 7.1, 8.1 opposés aux pieds 5, 6 des montants latéraux 7, 8 du châssis 1 définissent deux rails de guidage de la chambre guide 3.

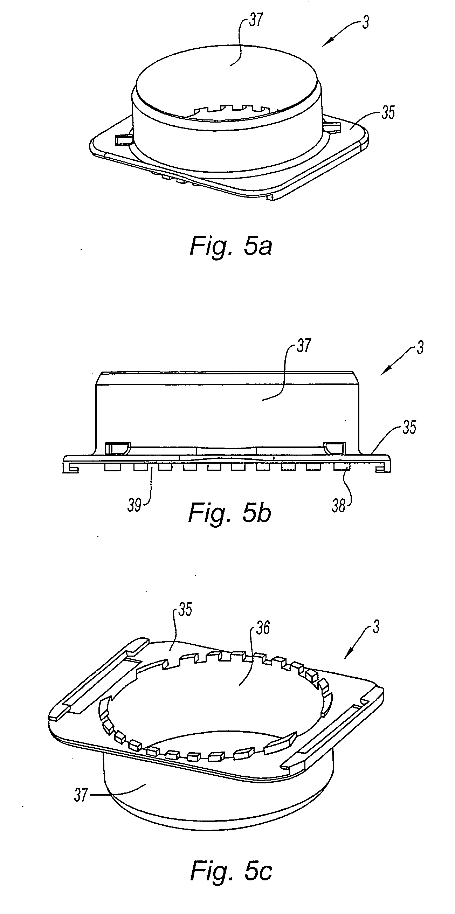

Selon les figures 5a, 5b et 5c, la chambre guide 3 est formée par une plaque de guidage 35 essentiellement rectangulaire munie d'une ouverture médiane circulaire 36 et se prolongeant autour de cette ouverture par une paroi cylindrique 37 délimitant à sa partie interne une chambre de réception des légumes à découper.

Le poussoir 4 est mobile en rotation autour de la paroi cylindrique 37 de la chambre guide 3 sur laquelle il s'emboîte et est susceptible d'être saisi manuellement par l'utilisateur de façon à permettre de déplacer le chariot 2 en va-et-vient le long des rails de guidage 7.1, 8.1 en exerçant constamment une pression sur les légumes contenus dans la chambre de réception de façon à les appliquer contre la lame de coupe transversale 11 et à permettre leur découpe par cette lame.

La configuration de ces différents éléments est largement similaire à celle des éléments correspondant du coupe-légumes manuel décrit dans le document antérieur susmentionné FR 2 825 043 et ne sera pour cette raison pas décrite en détail dans le cadre de cet exposé.

De façon non représentée sur les figures, le châssis 1 est équipé, à sa partie supérieure, au niveau de la rampe de réglage 12 de la hauteur de coupe d'un revêtement anti adhérent permettant d'améliorer le glissement des légumes à découper.

Ce revêtement ne s'étend pas sur la totalité de la largeur du châssis 1 mais uniquement à sa partie médiane de façon à permettre un centrage automatique des légumes lors du déplacement en va-et-vient du chariot 2 le long de celui-ci.

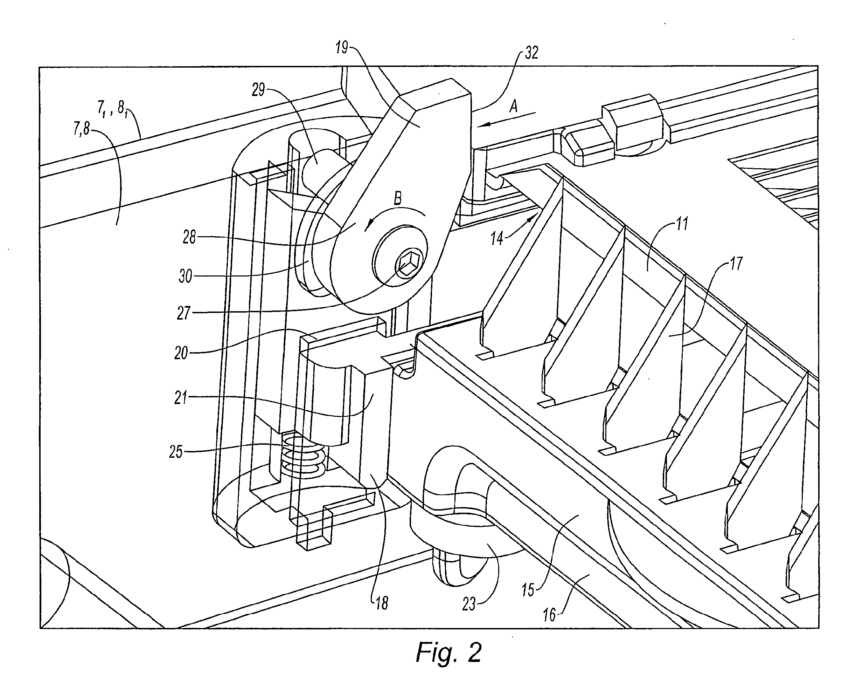

Selon la figure 2, le coupe-légumes est en outre équipé d'un couteau de découpe longitudinale amovible 15 monté entre les montants latéraux 7, 8 du châssis 1.

Ce couteau 15 est constitué par un corps 16 en un matériau synthétique ou métallique équipé d'un ensemble de lames triangulaires équidistantes 17 situées en regard de la lame transversale 11 au droit de la fente de passage 14 des légumes découpés.

Les lames triangulaires 17 sont orientées perpendiculairement à la lame 11 de façon à permettre de découper les légumes en bâtonnets ou en cubes.

De façon connue en elle-même et selon la figure 1, la translation en va-et-vient du chariot 2 le long des rails de guidage 7.1, 8.1 se décompose en une succession de phases actives pendant lesquelles les légumes sont découpés par les lames 11, 17 et de phases de retour du chariot 2 qui sont inopérantes.

Comme il sera décrit plus en détail dans la suite de cet exposé, le châssis 1 comporte des moyens de positionnement du couteau de découpe longitudinale 15 qui sont représentés sur les figures 2, 3 et 4.

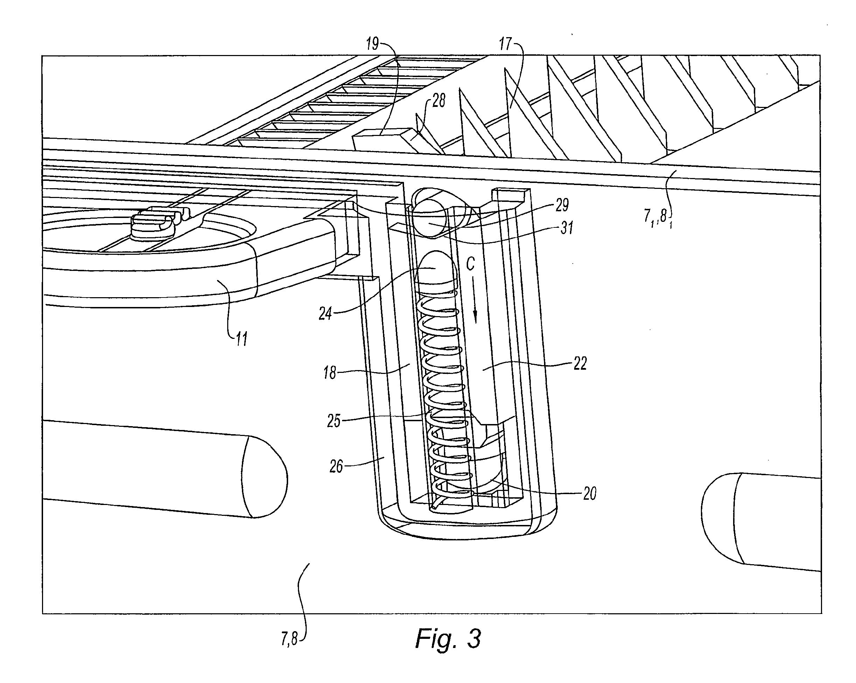

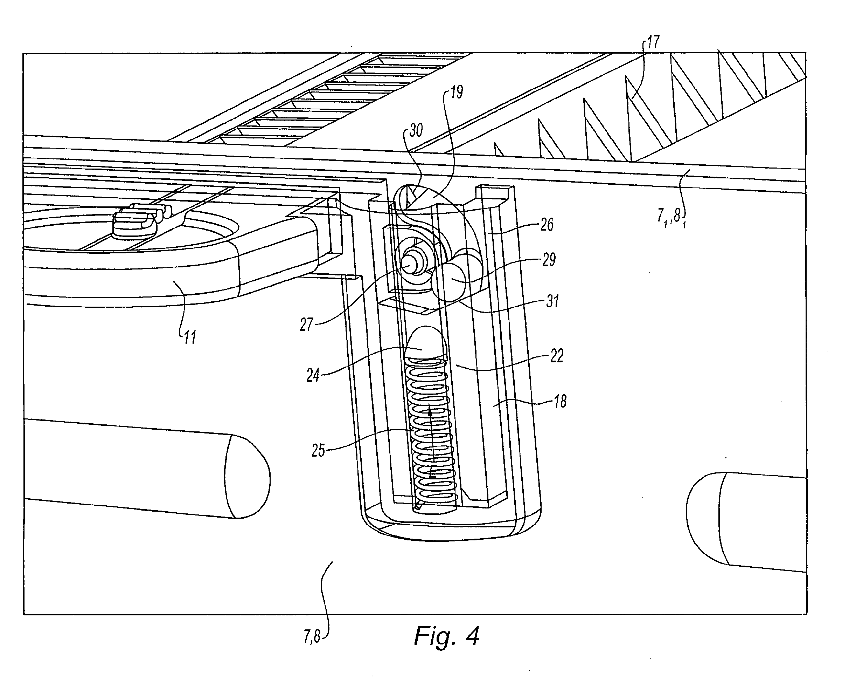

Ces moyens de positionnement qui sont symétriques par rapport à l'axe longitudinal du châssis 1 permettent un montage élastique de ce couteau 15 de part et d'autre des montants latéraux 7, 8 du châssis 1 entre une position de travail représentée sur les figures 2 et 3 dans laquelle les lames triangulaires 17 font largement saillie à la surface supérieure du châssis 1 et une position rétractée représentée sur la figure 4 dans laquelle les lames triangulaires 17 sont escamotées dans la fente de passage 14 des légumes découpés.

Selon les figures 2, 3 et 4, les moyens de positionnement sont essentiellement constitués par deux coulisseaux de réception 18 du couteau de découpe longitudinale 15 qui sont situés en regard l'un de l'autre et par deux cames d'actionnement 19 qui sont elles aussi situées en regard l'une de l'autre.

Les figures ne représentent qu'un seul de ces éléments 18, 19, mais ceux-ci sont bien entendu similaires de part et d'autre du chàssis 1.

Selon les figures 2, 3 et 4, le coulisseau de réception 18 est monté dans une fente 20 percée dans le montant latéral 7, 8 associé essentiellement perpendiculairement à l'axe longitudinal du châssis 1 et peut se déplacer en translation le long de cette fente.

Le coulisseau 18 comporte, de part et d'autre de la fente 20 d'une part une partie interne 21 représentée plus en détail sur la figure 2 et d'autre part une partie externe 22 représentée plus en détail sur les figures 3 et 4.

La partie interne 21 du coulisseau de réception 18 est équipée d'organes de maintien du couteau de découpe longitudinale 15.

Ces organes de maintien comportent des bossages et/ou des évidements non représentés sur les figures qui coopèrent avec des évidements et/ou des bossages correspondants prévus sur les faces latérales situées en regard du couteau de découpe longitudinale 15.

Les organes de maintien du couteau de découpe longitudinale 15 comportent également des barrettes rotatives 23 qui permettent de bloquer ce couteau 15 au niveau de sa face inférieure.

Selon les figures 3 et 4, la partie externe 22 du coulisseau de réception 18 est équipée d'un téton 24 venant en prise avec un ressort de rappel 25.

Le montant latéral 7, 8 est recouvert par un capot 26 sur sa face externe, au droit de la fente 20.

Ce capot 26 définit un logement de réception de la partie externe 22 du coulisseau de réception 18 ainsi que du ressort de rappel 25.

Dans un but de clarté, ce capot a été considéré comme transparent sur les figures 2, 3 et 4.

Selon les figures 2, 3 et 4, la came d'actionnement 19 est montée mobile en rotation autour d'un axe 27 solidaire du montant latéral 7, 8 associé du châssis 1 et dirigé transversalement par rapport à l'axe longitudinal de ce châssis.

Cette came 19 est plus précisément constituée par un secteur principal 28 comportant une rampe de manoeuvre 32, contigu à la face interne du montant latéral 7, 8 associé et se prolongeant vers l'extérieur par un pivot 29.

Au cours de la rotation de la came d'actionnement 19 autour de son axe 27, le pivot 29 se déplace dans une lumière oblongue courbe 30 qui est percée dans le montant latéral associé 7, 8.

Selon les figures 3 et 4, le pivot 29 fait saillie sur la face externe du montant 7, 8 associé et vient en prise avec une face supérieure opérationnelle 31 de la partie externe 22 du coulisseau de réception 18.

Selon les figures 1 à 4, le mode de fonctionnement du coupe-légumes manuel qui fait l'objet de l'invention est le suivant :
Au début d'une phase active de la translation en va-et-vient du chariot 2 le long des rails de guidage 7₁, 8₁, le couteau de découpe longitudinale 15 et les moyens de positionnement sont dans la position de travail représentée sur les figures 2 et 3.

Plus précisément, le pivot 29 de la came d'actionnement 19 est situé à l'extrémité supérieure de la lumière oblongue courbe 30 et le coulisseau de réception 18 est maintenu, sous l'action du ressort de rappel 25 qui vient en prise avec le téton 24, en position haute, à l'extrémité supérieure de la fente 20.

Le couteau de découpe longitudinale 15 et les moyens de positionnement sont maintenus dans cette position pendant la totalité de cette phase active c'est-à-dire pendant le déplacement de haut en bas du chariot 2 sur le châssis 1 de façon à garantir une découpe satisfaisante des légumes renfermés dans la chambre de réception en bâtonnets ou en cubes par les lames triangulaires 17 qui font alors largement saillie à l'extérieur du châssis 1.

Au cours de la phase de retour suivante du chariot 2, au début du déplacement de bas en haut de ce chariot 2 le long des rails de guidage 7₁, 8₁, le bord frontal 33 de la plaque de guidage de la chambre guide 3 vient en prise avec la rampe de manoeuvre 32 des cames d'actionnement 19 comme schématisé par la flèche A sur la figure 2 et entraîne la rotation de ces cames qui basculent selon la flèche B.

Cette rotation entraîne le déplacement des pivots 29 dans les lumières oblongues courbes 30 et par suite le déplacement vers le bas selon la flèche C (figure 3) des coulisseaux de réception 18 sous l'action de la pression exercée par les pivots 29 sur les faces supérieures opérationnelles 31 de ces coulisseaux 18, qui est opposée à la force des ressorts de rappel 25.

Au cours de ce déplacement, les tétons 24 appuient sur ces ressorts de rappel 25.

Les coulisseaux de réception 18 sont ainsi transférés dans la position basse représentée sur la figure 4, de façon à positionner le couteau de découpe longitudinale 15 en position rétractée.

Ce couteau 15 demeure dans cette position tant que la plaque de guidage de la chambre guide 3 est située au droit des cames d'actionnement 19.

A la fin de la phase de retour du chariot 2, le bord arrière 34 de la plaque de guidage de la chambre guide 3 se déplace selon la flèche D (figure 1) au-delà des cames d'actionnement 19 le long des rails de guidage 7₁, 8₁ et libère donc ces cames.

Les ressorts de rappel 25 exercent alors sur les tétons 24 une force dirigée vers le haut schématisée par la flèche E sur la figure 4 de façon à transférer les coulisseaux de réception 18 dans la position haute représentée sur la figure 3 et à positionner le couteau de découpe longitudinale 15 en position de travail.

Simultanément, les faces supérieures opérationnelles 31 des coulisseaux de réception 18 poussent les pivots 29 des cames d'actionnement 19 dans les lumières oblongues courbes 30, ce qui entraîne automatiquement la rotation de ces cames 19 en sens opposé à la flèche B (figure 2) autour de leur axe 27 et le déplacement des rampes de manoeuvre 32 vers l'extérieur du châssis 1.

Le couteau de découpe longitudinale 15 demeure en position de travail pendant la totalité de la phase active suivante, jusqu'à ce que, au début de la phase de retour du chariot 2 ultérieure, le bord frontal 33 de la plaque de guidage de la chambre guide 3 vienne à nouveau en prise avec la rampe de manoeuvre des cames d'actionnement, et ainsi de suite.

Simultanément, le pivot 29 se déplace dans la lumière oblongue courbe pour ramener les cames 19 en position déployée de façon à permettre à la chambre guide 3 de ramener à nouveau le couteau de découpe longitudinale 15 en position rétractée lors de la phase de retour suivante du déplacement du chariot 1.

Selon les figures 5a, 5b et 5c, la paroi cylindrique 37 de la chambre guide 3 se prolonge au-delà de la plaque de guidage 35 par une collerette 38 munie d'une série d'évidements 39 positionnés de manière à permettre le passage des lames triangulaires 17 du couteau de découpe longitudinale pendant les phases actives de la translation en va-et-vient du chariot 2.

## Revendications

1. Coupe-légumes manuel comportant :
- un châssis (1) muni d'une lame de coupe (11) montée transversalement en regard d'une fente de passage (14) des légumes découpés ainsi que deux montants latéraux parallèles (7, 8) définissant deux rails de guidage (7₁, 8₁).
- un chariot (2) mobile en translation en va-et-vient le long de ces rails de guidage (7₁, 8₁), et
- un couteau de découpe longitudinale (15), de préférence amovible, équipé d'un ensemble de lames (17) situées en regard de la lame transversale (11), au droit de la fente de passage des légumes découpés (14) et orientées essentiellement perpendiculairement à cette lame (11),
- la translation en va-et-vient du chariot (2) le long des rails de guidage (7₁, 8₁) se décomposant en une succession de phases actives pendant lesquelles les légumes sont découpés par les lames (11, 17) et de phases de retour du chariot (2), inopérantes,
**caractérisé en ce que**
le couteau de découpe longitudinale (15) coopère avec des moyens de positionnement (18, 19) permettant son montage élastique de part et d'autre du châssis (1) entre d'une part une position de travail dans laquelle les lames (17) font saillie à la surface supérieure du châssis (1) de façon à permettre de découper les légumes en bâtonnets ou en cubes pendant les phases actives et vers laquelle le couteau de découpe longitudinale (15) est automatiquement rappelé en l'absence de toute contrainte extérieure s'exerçant sur lui, et d'autre part une position rétractée dans laquelle les lames (17) sont escamotées dans la fente de passage des légumes découpés (14), la translation du chariot (2) pendant les phases de retour entraînant automatiquement le déplacement du couteau de découpe longitudinale (15) en position rétractée.

2. Coupe-légumes manuel selon la revendication 1, **caractérisé en ce que** le chariot (2) mobile est constitué :
- d'une part par une chambre guide (3) formée par une plaque de guidage essentiellement rectangulaire munie d'une ouverture médiane circulaire et se prolongeant autour de cette ouverture par une paroi cylindrique délimitant à sa partie interne une chambre de réception des légumes à découper, et
- d'autre part par un poussoir (4) mobile en rotation autour de la paroi cylindrique de la chambre guide (3) sur laquelle il s'emboîte et susceptible d'être saisi manuellement par l'utilisateur de façon à permettre de déplacer le chariot (2) en va-et-vient le long des rails de guidage (7₁, 8₁) en exerçant constamment une pression sur les légumes contenus dans la chambre de réception de façon à les appliquer contre la lame de coupe transversale (11) et à permettre leur découpe par cette lame

3. Coupe-légumes manuel selon la revendication 1 ou 2, **caractérisé en ce que** les lames du couteau de découpe longitudinale (15) sont des lames triangulaires équidistantes (17).

4. Coupe-légumes manuel selon l'une des revendications 1 à 3, **caractérisé en ce que**
les moyens de positionnement du couteau de découpe longitudinale (15) comportent :
- deux coulisseaux de réception (18) de ce couteau situés en regard, montés mobiles en translation le long des montants latéraux (7, 8) du châssis (1), essentiellement perpendiculairement à l'axe longitudinal de celui-ci, et respectivement soumis à l'action d'un moyen de rappel (25),
- ainsi que deux cames d'actionnement (19) situées en regard, montées mobiles en rotation sur les montants latéraux (7, 8) du châssis (1), autour d'un axe transversal (27), venant en prise avec un coulisseau de réception (18) associé et coopérant avec la chambre guide (3) pour permettre le déplacement du couteau de découpe longitudinale (15) entre la position de travail et la position rétractée au cours de la translation en va-et-vient du chariot (2).

5. Coupe-légumes manuel selon la revendication 4,
**caractérisé en ce que**
chacun des coulisseaux de réception (18) est monté dans une fente (20) percée dans l'un des montants latéraux (7, 8) du châssis (1), dans laquelle il peut se déplacer en translation, et comporte de part et d'autre de cette fente (20) d'une part une partie interne (21) équipée d'organes de maintien du couteau de découpe longitudinale (15) et d'autre part d'une partie externe (22) équipée d'un téton (24) par lequel elle vient en prise avec le moyen de rappel (25).

6. Coupe-légumes manuel selon la revendication 5,
**caractérisé en ce que**
chacune des fentes (20) est recouverte, sur sa face externe, d'un capot (26) définissant un logement pour la partie externe (22) du coulisseau de réception (18) ainsi que pour le ressort de rappel (25).

7. Coupe-légumes manuel selon l'une quelconque des revendications 5 et 6,
**caractérisé en ce que**
les organes de maintien du couteau de découpe longitudinale (15) sont constitués d'une part par des bossages et/ou des évidements prévus sur la face interne de la partie interne (21) des coulisseaux de réception (18) et coopérant avec des évidements et/ou des bossages correspondants prévus sur les faces latérales situées en regard du couteau de découpe longitudinale (15), et d'autre part par des barrettes rotatives (23) permettant de bloquer ce couteau (15) au niveau de sa face inférieure.

8. Coupe-légumes manuel selon l'une quelconque des revendications 5 à 7,
**caractérisé en ce que**
chacune des cames d'actionnement (19) comporte un secteur principal (28) mobile en rotation le long de la face interne du montant latéral (7, 8) associé et se prolongeant vers l'extérieur par un pivot (29) se déplaçant dans une lumière (30) percée dans ce montant et faisant saillie sur la face externe de celui-ci pour venir en prise avec une face supérieure, opérationnelle (31), de la partie externe (22) du coulisseau de réception (18) associé pour permettre de déplacer le couteau de découpe longitudinale (15) vers la position rétractée.

9. Coupe-légumes manuel selon la revendication 8,
**caractérisé en ce que**
le secteur principal (28) de chacune des cames (19) comporte une rampe de manoeuvre (32) venant en prise avec la chambre guide (3) pendant les phases de retour du chariot (2) de façon à déplacer le couteau de découpe longitudinale (15) en position rétractée.

10. Coupe-légumes manuel selon l'une quelconque des revendications 2 à 9,
**caractérisé en ce que**
la paroi cylindrique de la chambre guide (3) se prolonge au-delà de la plaque de guidage par une collerette munie d'une série d'évidements positionnés de manière à permettre le passage des lames (17) du couteau de découpe longitudinale (15) pendant les phases actives de la translation en va-et-vient du chariot (2).

11. Coupe-légumes manuel selon l'une quelconque des revendications 1 à 10,
**caractérisé en ce que**
le châssis (1) est équipé d'un revêtement anti adhésif à sa partie supérieure.

12. Coupe-légumes manuel selon la revendication 11,
**caractérisé en ce que**
le revêtement anti adhésif s'étend uniquement à la partie médiane du châssis (1).

13. Coupe-légumes manuel selon l'une quelconque des revendications 1 à 10,
**caractérisé en ce que** la plaque de guidage est essentiellement rectangulaire.

## Claims

1. Manual vegetable chopper comprising:
- a frame (1) equipped with a cutting blade (11) mounted transversely facing a passage slot (14) for the chopped vegetables as well as two parallel side posts (7, 8) defining two guide rails (7₁, 8₁),
- a carriage (2) displaceable in two-way translation along these guide rails (7₁, 8₁), and
- a longitudinal chopping unit (15), preferably detachable, equipped with a set of blades (17) disposed facing the transverse blade (11) aligned with the passage slot for the chopped vegetables (14) and oriented substantially perpendicular to this blade (11),
- the two-way translating movement of the carriage (2) along the guide rails (7₁, 8₁) being made up of a succession of active phases during which the vegetables are chopped by the blades (11, 17) and inoperative return phases of the carriage (2), **characterised in that**
the longitudinal chopping unit (15) co-operates with positioning means (18, 19) enabling it to be elastically mounted on either side of the frame (1) between a working position on the one hand, in which the blades (17) protrude beyond the top surface of the frame (1) to enable the vegetables to be chopped into strips or cubes during the active phases and towards which the longitudinal chopping unit (15) is automatically returned in the absence of any external constraint acting on it, and a retracted position on the other hand, in which the blades (17) are retracted into the passage slot for the chopped vegetables(14), the translating movement of the carriage (2) during the return phases automatically causing the longitudinal chopping unit (15) to be displaced into the retracted position.

2. Manual vegetable chopper as claimed in claim 1, **characterised in that** the displaceable carriage (2) comprises:
- on the one hand a guide chamber (3) formed by a substantially rectangular guide plate provided with a circular median opening and extended around this opening by a cylindrical wall delimiting a receiving chamber in its internal part for the vegetables to be chopped, and
- on the other hand a pushing means (4) displaceable in rotation around the cylindrical wall of the guide chamber (3) on which it is nested, and designed to be manually gripped by the user to enable the carriage (2) to be moved backwards and forwards along the guide rails (7₁, 8₁) whilst constantly applying pressure to the vegetables contained in the receiving chamber in order to apply them against the transverse cutting blade (11) and enabling them to be chopped by this blade.

3. Manual vegetable chopper as claimed in claim 1 or 2, **characterised in that** the blades of the longitudinal chopping unit (15) are equidistant triangular blades (17).

4. Manual vegetable chopper as claimed in one of claims 1 to 3,
**characterised in that**
the means for positioning the longitudinal chopping unit (15) comprise:
- two receiving slides (18) facing this chopping unit, mounted so as to be displaceable in translation along the side posts (7, 8) of the frame (1) substantially perpendicular to the longitudinal axis thereof and respectively subjected to the action of a return means (25),
- as well as two facing actuating cams (19) mounted so as to be displaceable in rotation on the side posts (7, 8) of the frame (1) about a transverse axis (27) so as to engage with an associated receiving slide (18) and co-operating with the guide chamber (3) to enable the longitudinal chopping unit (15) to be displaced between the working position and the retracted position during the two-way translation of the carriage (2).

5. Manual vegetable chopper as claimed in claim 4, **characterised in that**
each of the receiving slides (18) is mounted in a slot (20) extending through one of the side posts (7, 8) of the frame (1), in which it can be displaced in translation, and comprises, on either side of this slot (20), an internal part (21) equipped with holder elements for the longitudinal chopping unit (15) on the one hand, and an external part (22) equipped with a lug (24) by means of which it engages with the return means (25) on the other hand.

6. Manual vegetable chopper as claimed in claim 5, **characterised in that**
each of the slots (20) is covered at its external face by a cover (26) defining a housing for the external part (22) of the receiving slide (18) as well as for the return spring (25).

7. Manual vegetable chopper as claimed in any one of claims 5 and 6,
**characterised in that**
the holder elements of the longitudinal chopping unit (15) comprise bosses and/or recesses in the internal face of the internal part (21) of the receiving slides (18) co-operating with complementary recesses and/or bosses provided on the lateral faces disposed facing the longitudinal chopping unit (15) on the one hand, and rotating strips (23) enabling this chopping unit (15) to be blocked at the level of its bottom face on the other hand.

8. Manual vegetable chopper as claimed in any one of claims 5 to 7,
**characterised in that**
each of the actuating cams (19) has a main sector (28) displaceable in rotation along the internal face of the co-operating side post (7, 8) and extended towards the exterior by a pivot (29) which is displaced in an orifice (30) extending through this post and extends beyond the external face of the latter so as to engage with a top operating face (31) of the external part (22) of the co-operating receiving slide (18) to enable the longitudinal chopping unit (15) to be displaced towards the retracted position.

9. Manual vegetable chopper as claimed in claim 8, **characterised in that**
the main sector (28) of each of the cams (19) has a manoeuvring ramp (32) which engages with the guide chamber (3) during the return phases of the carriage (2) in order to displace the longitudinal chopping unit (15) into the retracted position.

10. Manual vegetable chopper as claimed in any one of claims 2 to 9,
**characterised in that**
the cylindrical wall of the guide chamber (3) is extended beyond the guide plate by means of a collar provided with a series of recesses positioned so as to provide a passage for the blades (17) of the longitudinal chopping unit (15) during the active phases of the two-way translating movement of the carriage (2).

11. Manual vegetable chopper as claimed in any one of claims 1 to 10,
**characterised in that**
the frame (1) is provided with a non-stick coating on its top part.

12. Manual vegetable chopper as claimed in claim 11, **characterised in that**
the non-stick coating extends solely on the median part of the frame (1).

13. Manual vegetable chopper as claimed in any one of claims 1 to 10,
**characterised in that**
the guide plate is substantially rectangular.

## Patentansprüche

1. Manueller Gemüseschneider, umfassend:
- ein Untergestell (1), versehen mit einer Schneidklinge (11), die gegenüber von einem Durchgangsschlitz (14) für geschnittenes Gemüse quer angebracht ist, und mit zwei parallel zueinander verlaufenden seitlichen Stützen (7, 8), die zwei Führungsschienen (7₁, 8₁) begrenzen,
- einen Schlitten (2), der an diesen Führungsschienen (7₁, 8₁) entlang in Hin- und Herbewegungen verschiebbar ist und
- ein in Längsrichtung verlaufendes Schneidmesser (15), das vorzugsweise abnehmbar ist, wobei das Schneidmesser mit einer Klingenanordnung (17) versehen ist, die gegenüber von der Querklinge (11) rechts von dem Durchgangsschlitz (14) für das geschnittene Gemüse angeordnet und im Wesentlichen senkrecht zu dieser Klinge (11) ausgerichtet ist,
- wobei die Hin- und Herbewegung des Schlittens (2) an den Führungsschienen (7₁, 8₁) entlang aus einem Aufeinanderfolgen von aktiven Phasen, bei denen das Gemüse von den Klingen (11, 17) geschnitten wird, und unwirksamen Rücklaufphasen des Schlittens (2), besteht,
**dadurch gekennzeichnet, dass**
das in Längsrichtung verlaufende Schneidmesser (15) mit Positioniermitteln (18, 19) zusammenwirkt, die dessen beiderseitiges elastisches Anbringen an dem Untergestell (1) ermöglichen, zwischen einerseits einer Arbeitsstellung, bei der die Klingen (17) bis zur oberen Fläche des Untergestells (1) vorgeschoben werden, um bei den aktiven Phasen das Schneiden des Gemüses in Stifte oder in Würfel zu ermöglichen, wobei in Ermangelung des Ausübens jeder äußeren Spannung auf das in Längsrichtung verlaufende Schneidmesser (15) dieses automatisch in Richtung auf die Arbeitsstellung zurückgefahren wird, und andererseits einer Rückzugsstellung, bei der die Klingen (17) in dem Durchgangsschlitz (14) für das geschnittene Gemüse eingezogen sind, wobei die Translation des Schlittens (2) bei den Rücklaufphasen das Verschieben des in Längsrichtung verlaufenden Schneidmessers (15) in die Rückzugsstellung automatisch bewirkt.

2. Manueller Gemüseschneider nach Anspruch 1, **dadurch gekennzeichnet, dass** der verschiebbare Schlitten (2)
- einerseits aus einer Führungskammer (3) besteht, die durch eine im Wesentlichen rechteckförmige Führungsplatte gebildet ist, die mit einer mittleren kreisförmigen Öffnung versehen ist und mittels einer zylindrischen Wand um diese Öffnung verläuft, wobei der innere Abschnitt der Wand ein Aufnahmeloch für das zu schneidende Gemüse begrenzt, und
- andererseits aus einer Druckvorrichtung (4) besteht, die um die zylindrische Wand der Führungskammer (3) auf drehbare Weise beweglich ist und an diese angrenzt und dazu geeignet ist, von dem Benutzer manuell erfasst zu werden, so dass der Schlitten (2) an den Führungsschienen (7₁, 8₁) entlang hin und her verschoben werden kann, wobei ein Druck auf das in der Aufnahme-kammer enthaltene Gemüse konstant ausgeübt wird, so dass dieses an der quer verlaufenden Schneidklinge (11) angelegt wird und von dieser Klinge geschnitten werden kann.

3. Manueller Gemüseschneider nach Anspruch 1 oder 2, **dadurch gekennzeichnet, dass** die Klingen des in Längsrichtung verlaufenden Schneidmessers (15) gleichweit entfernte, dreieckige Klingen (17) sind.

4. Manueller Gemüseschneider nach einem der Ansprüche 1 bis 3,
**dadurch gekennzeichnet, dass**
die Positioniermittel des in Längsrichtung verlaufenden Schneidmessers (15) umfassen:
- zwei Aufnahmeschieber (18) dieses Messers, die sich gegenüberliegen und an den seitlichen Stützen (7, 8) des Untergestells (1) entlang, im Wesentlichen senkrecht zu dessen Längsachse in Translation verschiebbar angebracht und jeweils der Wirkung einer Rückstelleinrichtung (25) ausgesetzt sind,
- und zwei Antriebsnocken (19), die sich gegenüberliegen und an den seitlichen Stützen (7, 8) des Untergestells (1) auf drehbare Weise beweglich um eine Querachse (27) angebracht sind, in einen zugeordneten Aufnahmeschieber (18) eingreifen und mit der Führungskammer (3) zusammenwirken, um das Verschieben des in Längsrichtung verlaufenden Schneidmessers (15) zwischen der Arbeitsstellung und der Rückzugsstellung im Verlaufe der Hin- und Herbewegung des Schlittens (2) zu ermöglichen.

5. Manueller Gemüseschneider nach Anspruch 4,
**dadurch gekennzeichnet, dass**
jeder Aufnahmeschieber (18) in einem Schlitzloch (20) in einer der seitlichen Stützen (7, 8) des Untergestells (1) angebracht ist, in dem er in Translation verschoben werden kann, und auf beiden Seiten dieses Lochs (20) einerseits einen inneren Abschnitt (21) umfasst, der mit Mitteln für die Instandhaltung des in Längsrichtung verlaufenden Schneidmessers (15) versehen ist, und andererseits einen äußeren Abschnitt (22) umfasst, der mit einem Ansatz (24) versehen ist, über den er mit der Rückstelleinrichtung (25) in Eingriff tritt.

6. Manueller Gemüseschneider nach Anspruch 5,
**dadurch gekennzeichnet, dass**
jeder Schlitz (20) an seiner äußeren Fläche von einer Haube (26) bedeckt ist, die einen Sitz für den äußeren Abschnitt (22) des Aufnahmeschiebers (18) sowie für die Rückstelleinrichtung (25) begrenzt.

7. Manueller Gemüseschneider nach einem der Ansprüche 5 und 6,
**dadurch gekennzeichnet, dass**
die Mittel für die Instandhaltung des in Längsrichtung verlaufenden Schneidmessers (15) einerseits aus Vorsprüngen und/oder Vertiefungen bestehen, die an der inneren Fläche des inneren Abschnitts (21) der Aufnahmeschieber (18) vorgesehen sind und mit entsprechenden Vertiefungen und/oder Vorsprüngen zusammenwirken, die an den seitlichen Flächen vorgesehen sind, die dem in Längsrichtung verlaufenden Schneidmesser (15) gegenüberliegen, und andererseits aus Drehleisten (23) bestehen, die das Arretieren dieses Messers (15) auf der Höhe seiner unteren Fläche ermöglichen.

8. Manueller Gemüseschneider nach einem der Ansprüche 5 bis 7,
**dadurch gekennzeichnet, dass**
jeder der Antriebsnocken (19) einen Hauptabschnitt (28) umfasst, der an der inneren Fläche der zugeordneten seitlichen Stütze (7, 8) entlang drehbar ist und sich mittels eines Drehzapfens (29) in Richtung auf die Außenseite verlängert, wobei sich der Drehzapfen in einer Öffnung (30) verschiebt, die in dieser Stütze gebohrt ist, und an die äußere Fläche der Stütze vorgeschoben wird, um in eine obere, wirkende Fläche (31) des äußeren Abschnitts (22) des zugeordneten Aufnahmeschiebers (18) einzugreifen, um das Verschieben des in Längsrichtung verlaufenden Schneidmessers (15) in Richtung auf die Rückzugsstellung zu ermöglichen.

9. Manueller Gemüseschneider nach Anspruch 8,
**dadurch gekennzeichnet, dass**
der Hauptabschnitt (28) von jedem Nocken (19) eine Betätigungsrampe (32) umfasst, die bei den Rückzugsphasen des Schlittens (2) in die Führungskammer (3) eingreift, so dass das in Längsrichtung verlaufende Schneidmesser (15) in die Rückzugsstellung verschoben wird.

10. Manueller Gemüseschneider nach einem der Ansprüche 2 bis 9,
**dadurch gekennzeichnet, dass**
sich die zylindrische Wand der Führungskammer (3) über die Führungsplatte hinaus verlängert, und zwar mittels eines Flansches, der mit einer Reihe von Aussparungen versehen ist, die so angeordnet sind, dass sie bei den aktiven Phasen der Hin- und Herbewegung des Schlittens (2) den Durchtritt der Klingen (17) des in Längsrichtung verlaufenden Schneidmessers (15) erlauben.

11. Manueller Gemüseschneider nach einem der Ansprüche 1 bis 10,
**dadurch gekennzeichnet, dass**
das Untergestell (1) an seinem oberen Abschnitt mit einer Antihaftbeschichtung versehen ist.

12. Manueller Gemüseschneider nach Anspruch 11,
**dadurch gekennzeichnet, dass**
sich die Antihaftbeschichtung nur über den mittleren Abschnitt des Untergestells (1) erstreckt.

13. Manueller Gemüseschneider nach einem der Ansprüche 1 bis 10,
**dadurch gekennzeichnet, dass**
die Führungsplatte im Wesentlichen rechteckförmig ist.
